# FASCICULE DE BREVET EUROPEEN

(11) **EP 0 778 074 B1**
(45) Date de publication et mention de la délivrance du brevet: **28.04.2004**
(21) Numéro de dépôt: 96420340.0
(22) Date de dépôt: 27.11.1996
(51) Int. Cl.: B01D 63/06, B01D 29/52, B01D 46/24

(54) **Elément tubulaire inorganique de filtration comportant des canaux de section non circulaire présentant des profils optimisés**
Anorganisches rohrförmiges Filterelement mit Kanälen die einen nicht-kreisförmigen Durchschnitt und optimierte Profile aufweisen
Inorganic tubular filter element comprising channels with a non-circular cross-section and having optimised profiles

(30) Priorité: 05.12.1995 FR 9514517
(43) Date de publication de la demande: 11.06.1997
(73) Titulaire: T.A.M.I. INDUSTRIES, F-26110 Nyons (FR)
(72) Inventeur: Grangeon, André, 84600 Valreas (FR); Lescoche, Philippe, 84110 Faucon (FR)
(74) Mandataire: Thibault, Jean-Marc

(56) Documents cités:
- EP-A- 0 352 015
- EP-A- 0 780 148
- WO-A-93/07959
- DE-A- 3 501 941
- US-A- 4 222 874
- US-A- 4 358 428

## Description

La présente invention concerne le domaine technique de la séparation moléculaire ou particulaire mettant en oeuvre des éléments de séparation appelés généralement membranes et constitués à partir de matériaux inorganiques.

L'objet de l'invention vise, plus précisément, la réalisation d'un élément inorganique de filtration de forme générale tubulaire permettant de concentrer, trier ou extraire des espèces moléculaires ou particulaires contenues dans un milieu fluide qui exerce une pression donnée sur la membrane.

L'objet de l'invention trouve une application particulièrement avantageuse dans le domaine de la nanofiltration, l'ultrafiltration, la microfiltration, la filtration ou l'osmose inverse.

Dans l'état de la technique, il est connu de nombreuses membranes réalisées à partir d'éléments tubulaires de filtration. Ainsi, il est connu un élément de filtration de type multicanal comportant un support poreux rigide de forme allongée présentant une section droite polygonale ou circulaire. Le support poreux, qui est par exemple réalisé en céramique, est aménagé pour comporter une série de canaux parallèles entre-eux et à l'axe longitudinal du support poreux, présentant chacun une section droite transversale circulaire. La surface des canaux est recouverte d'au moins une couche séparatrice dont la nature et la morphologie sont adaptées pour assurer la séparation des molécules ou des particules contenues dans le milieu liquide circulant à l'intérieur des canaux. Une telle membrane réalise, par effet tami, une séparation des espèces moléculaires ou particulaires du produit à traiter, dans la mesure où toutes les molécules ou particules supérieures au diamètre des pores de la membrane sont arrêtées. Durant la séparation, le transfert du fluide s'effectue à travers la ou les couches séparatrices, puis le fluide se répand dans la porosité du support pour se diriger vers la surface extérieure du support poreux.

Un inconvénient majeur de ces éléments de filtration multicanaux réside dans le faible débit du filtrat obtenu. En effet, le trajet que doit suivre le filtrat, avant d'atteindre la surface extérieure du support, pour ce qui concerne les canaux situés dans la partie centrale du support, est beaucoup plus long que celui des autres canaux, notamment périphériques. De plus, les filtrats provenant des canaux de la région centrale du support récupèrent les filtrats provenant des autres canaux. Pour ces raisons, il apparaît une perte de charge pour le transfert du filtrat vers la surface extérieure du support. Cette perte de charge s'oppose à la pression du transfert et réduit la vitesse de passage.

Pour tenter de remédier à cet inconvénient, la demande de brevet **WO 93/07 959** a proposé un élément tubulaire de filtration dont les canaux présentent chacun une section droite transversale non circulaire. Selon un premier mode de réalisation, l'élément de filtration comporte un support poreux inorganique dans lequel les canaux sont ménagés parallèlement à l'axe central du support en étant disposés sensiblement selon un cercle coaxial à l'axe central. Chaque canal comporte, selon une section droite transversale, une paroi périphérique dirigée vers la surface extérieure du support en délimitant avec cette dernière, un couloir d'épaisseur constante assurant l'acheminement du filtrat. Chaque paroi périphérique est prolongée, de part et d'autre, par des parois radiales raccordées entre elles et délimitant chacune une cloison avec la paroi radiale en vis-à-vis d'un canal voisin. Le profil des canaux est choisi de manière à laisser subsister des cloisons s'évasant en forme de coin vers l'extérieur du substrat. Selon un deuxième mode de réalisation, les axes des canaux sont situés soit sur plusieurs cercles coaxiaux à l'axe du support, soit selon des couches parallèles les unes aux autres et à l'axe du support poreux. Selon ce deuxième mode de réalisation, les canaux voisins entre deux couches laissent subsister une cloison s'évasant également vers l'extérieur du substrat. Il s'avère ainsi que la forme en coin des cloisons délimitées entre les parois radiales favorisent le transfert du perméat vers la surface extérieure du support.

Il apparaît aussi qu'un tel élément permet, par la réalisation de canaux de section non circulaire, d'augmenter le rapport de la surface de filtration par rapport au volume du support poreux utilisé. Il doit, toutefois, être constaté qu'un tel élément présente une difficulté majeure de mise en oeuvre. En effet, pour occuper au mieux la section du support poreux afin d'accroître la surface de filtration, la demande de brevet ci-dessus décrit, dans sa **fig. 3,** une variante de réalisation dans laquelle les canaux peuvent être classés en trois catégories différentes. Les canaux de la première catégorie ont leurs axes situés sur un cercle coaxial à l'axe central du support. Tous ces canaux présente, d'une part, une section droite transversale identique pouvant être qualifiée de pentagonale et, d'autre part, un diamètre hydraulique identique. Il est rappelé qu'en raison de la forme non circulaire des canaux, le diamètre de chaque canal est défini par le diamètre hydraulique **Φh,** tel que Φ**h = 4.S/P**, avec **S**, la section du canal et **P**, le périmètre de ce canal. Les canaux de la deuxième catégorie ont leurs axes situés sur un cercle coaxial à l'axe central du support mais situé à l'intérieur du cercle sur lequel sont situés les axes des canaux de la première catégorie. Tous les canaux de la deuxième catégorie présentent, d'une part, une section droite transversale identique pouvant être qualifiée de triangulaire et, d'autre part, un diamètre hydraulique identique. Une troisième catégorie comporte un canal de section circulaire centré sur l'axe central du support poreux.

Un examen de ce type d'élément conduit à constater que les sections droites transversales des canaux sont différentes pour les trois catégories de canaux. Il s'ensuit que la vitesse de circulation du fluide dans les canaux des trois catégories est différente, puisque cette vitesse est égale au flux circulant dans le canal divisé par la section droite transversale de ce canal. La vitesse de circulation est l'un des paramètres qui participe à la valeur de la contrainte de cisaillement, cette contrainte étant créée à la paroi de l'élément en raison du fonctionnement de l'élément de filtration en régime tangentiel. Ce principe de fonctionnement favorise le décolmatage de la surface de l'élément de filtration, par cette contrainte de cisaillement qui élimine les matières déposées. Dans l'élément de filtration susdécrit, le décolmatage tangentiel n'est pas homogène pour tous les canaux, en raison des vitesses de circulation différentes, ce qui conduit à un dysfonctionnement de l'élément de filtration.

Par ailleurs, le souci d'optimiser le rapport de la surface de filtration par rapport au volume du support poreux utilisé, conduit à la réalisation d'un élément de filtration tel que décrit ci-dessus, dont les canaux présentent des diamètres hydrauliques de valeurs différentes. Dans certaines applications, pour lesquelles le fluide à traiter possède un caractère hétérogène, il peut être constaté un bouchage des canaux présentant un trop faible diamètre hydraulique.

La demande de brevet EP 0 780 148 A, appartenant à l'état de la technique visé à l'article 54(3) CBE, décrit un élément inorganique de filtration comportant un support poreux de forme cylindrique et des canaux ménagés sur le support, ces canaux peuvent être classés dans plusieurs catégories, la forme des sections droites transversales des canaux étant différentes entre les catégories. Tous les canaux présentent le même diamètre hydraulique. Le transfert du perméat vers la surface extérieure du support est favorisé en choisissant une forme déterminée des cloisons subsistant entre les canaux.

Si la réalisation d'un élément de filtration comportant des canaux de section non circulaire présente un avantage indéniable en ce qui concerne l'augmentation de la surface de filtration par rapport au volume du support poreux utilisé, il doit être constaté que subsiste un problème pour définir les dimensions et la forme des canaux en vue d'éviter un décolmatage inhomogène entre les canaux et une obturation de certains des canaux par le fluide à traiter.

Il apparaît donc le besoin de définir les caractéristiques d'un élément de filtration qui soit conçu pour optimiser le rapport de la surface filtrante sur le volume de support poreux utilisé tout en permettant d'obtenir un décolmatage homogène dans tous les canaux et une absence d'obstruction des canaux par le fluide à traiter.

L'objet de l'invention vise justement à proposer un élément inorganique visant à satisfaire le besoin exprimé ci-dessus.

Pour atteindre cet objectif, l'élément inorganique de filtration d'un milieu fluide, en vue de récupérer un filtrat, comporte :
- un support poreux rigide inorganique de forme cylindrique présentant un axe central longitudinal et possédant une section droite transversale hexagonale ou circulaire,
- des canaux ménagés sur le support parallèlement à son axe central et présentant une surface recouverte par au moins une couche séparatrice destinée à être en contact avec le milieu fluide, ces canaux pouvant être classés dans n catégories, avec n ≥ 2, dans chacune desquelles tous les canaux présentent une section droite transversale identique, un diamètre hydraulique identique et un diamètre équivalent identique, la forme des sections droites transversales des canaux étant différente entre les catégories.

Selon l'invention, les canaux des différentes catégories présentent :
- des diamètres hydrauliques, tels que les rapports entre deux quelconques diamètres hydrauliques soient compris dans l'intervalle 0,75 - 1,3,
- des sections droites transversales, telles que les rapports entre deux quelconques sections droites transversales soient compris dans l'intervalle 0,75 - 1,3,
- et des diamètres équivalents, tels que le rapport entre le diamètre équivalent et le diamètre hydraulique pour chaque canal soit inférieur ou égal à 2.

Diverses autres caractéristiques ressortent de la description faite ci-dessous en référence aux dessins annexés qui montrent, à titre d'exemples non limitatifs, des formes de réalisation et de mise en oeuvre de l'objet de l'invention.
La **fig. 1** est une vue en coupe transversale d'un exemple de réalisation d'un élément de filtration.
La **fig. 2** est une vue en coupe transversale d'un autre exemple de réalisation d'un élément de filtration.

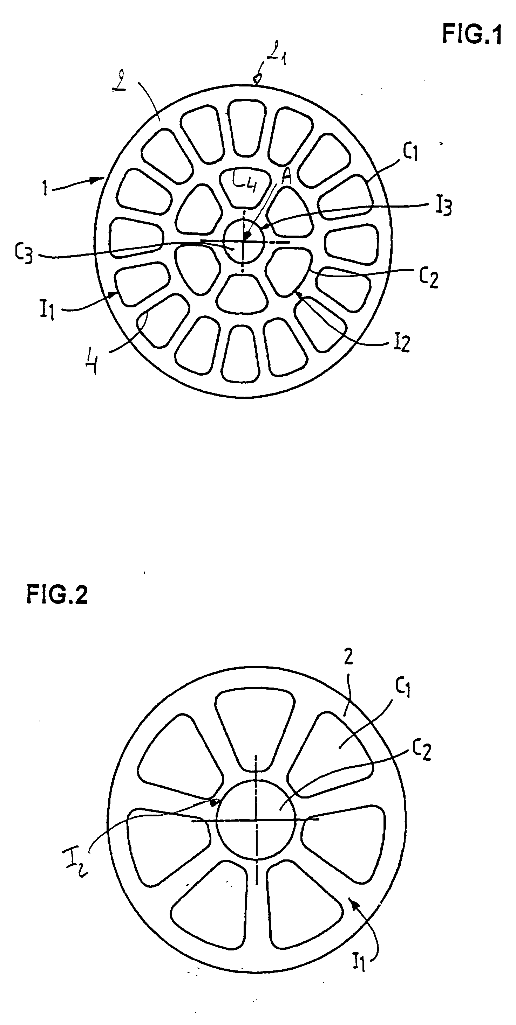

Tel que cela ressort de la **fig. 1**, l'élément inorganique de filtration **1** conforme à l'invention est adapté pour assurer la séparation ou la filtration de molécules ou de particules contenues dans un milieu fluide, de préférence liquide, de nature diverse comportant une phase solide ou non. L'élément de filtration **1** comporte un support poreux rigide inorganique **2** constitué dans une matière dont la résistance au transfert est adaptée à la séparation à effectuer. Le support **2** est réalisé à partir de matériaux inorganiques, tels que des oxydes métalliques, du carbone ou des métaux. Le support **2** est réalisé généralement sous une forme allongée ou d'un conduit s'étendant selon un axe central longitudinal **A**. Le support poreux **2** possède un diamètre moyen équivalent des pores compris entre 2 et 12 µm et, de préférence, de l'ordre de 5 µm. Le support **2** possède une section droite transversale hexagonale ou, comme dans l'exemple illustré à la **fig. 1,** circulaire. Le support **2** offre ainsi une surface extérieure **2**_{**1**} cylindrique.

Le support **2** est aménagé pour comporter une première catégorie **I**_{**1**} de canaux **C**_{**1**} réalisés parallèlement à l'axe **A** du support. Les canaux **C**_{**1**} présentent chacun une surface **4** recouverte par au moins une couche séparatrice non représentée, destinée à être en contact avec le milieu fluide à traiter circulant à l'intérieur des canaux **C**_{**1**}. La nature de la ou des couches séparatrices est choisie en fonction du pouvoir de séparation ou de filtration à obtenir et forme avec le support une liaison intime, de façon que la pression provenant du milieu liquide soit transmise au support poreux 2. Cette ou ces couches peuvent être déposées à partir par exemple de suspensions contenant au moins un oxyde métallique et classiquement utilisé dans la production des éléments de filtration minéraux. Cette ou ces couches sont soumises, après séchage, à une opération de frittage qui permet de les consolider et de les lier entre-elles ainsi qu'au support poreux **2**.

Tous les canaux **C**_{**1**} présentent une section droite transversale possédant une surface ou une aire **S**_{**1**} de même valeur. Il s'ensuit que tous les canaux **C**_{**1**} présentent un diamètre équivalent Φ**e**_{**1**} de même valeur, dans la mesure où Φ**e**_{**1**} = (**S**_{**1**}**. 4/π)**^{**½**}. De préférence, tous les canaux **C**_{**1**} présentent un profil ou une forme identique. De plus, tous les canaux **C**_{**1**} possèdent un diamètre hydraulique Φ**h**_{**1**} identique. Dans l'exemple illustré à la **fig. 1**, la première catégorie **I**_{**1**} comporte seize canaux **C**_{**1**}, dits périphériques, dont leurs centres sont situés sur un cercle coaxial à l'axe central **A**. Tous les canaux **C**_{**1**} présentent une section droite transversale de forme générale en quadrilatère.

Conformément à l'invention, l'élément de filtration 1 comporte au moins une deuxième catégorie **I**_{**2**} de canaux **C**_{**2**} présentant chacun également une surface **4** recouverte par au moins une couche séparatrice comme expliqué ci-dessus. Tous les canaux **C**_{**2**} présentent une section droite transversale possédant une surface ou une aire **S**_{**2**} de même valeur. Les canaux **C**_{**2**} possédent une même valeur pour le diamètre équivalent **Φe**_{**2**}. De préférence, tous les canaux **C**_{**2**} présentent un profil ou une forme identique. Toutefois, la forme de la section droite transversale des canaux **C**_{**2**} de la deuxième catégorie **I**_{**2**} est différente de la forme ou du profil de la section droite transversale des canaux **C**_{**1**} de la première catégorie **I**_{**1**}. De plus, tous les canaux **C**_{**2**} possèdent un diamètre hydraulique Φ**h**_{**2**} identique.

Dans l'exemple illustré à la **fig. 1,** la deuxième catégorie **I**_{**2**} comporte six canaux **C**_{**2**}, dits internes, dont leurs centres sont situés sur un cercle coaxial à l'axe central A, ce cercle coaxial présentant un diamètre inférieur par rapport au cercle coaxial sur lequel sont situés les centres des canaux **C**_{**1**}. Dans cet exemple illustré, tous les canaux **C**_{**2**} présentent une section droite transversale de forme générale en trapèze.

Conformément à l'invention, les canaux **C**_{**1**} de la première catégorie **I**_{**1**} présentent une section droite transversale dont la valeur **S**_{**1**} est sensiblement identique à la valeur **S**_{**2**} de la section droite transversale des canaux de la deuxième catégorie **I**_{**2**}. Les valeurs **S**_{**1**} et **S**_{**2**} sont considérées comme sensiblement identiques si le rapport **S**_{**1**} / **S**_{**2**} (ou **S**_{**2**} / **S**_{**1**}) est compris dans l'intervalle 0,75-1,3 et, de préférence, dans l'intervalle 0,93-1,05. Ainsi, dans l'exemple illustré à la **fig. 1,** tous les canaux **C**_{**1**} présentent une section droite transversale de valeur **S**_{**1**} = 12 mm², tandis que tous les canaux **C**_{**2**} présentent une section droite transversale de valeur **S**_{**2**} = 10 mm². Le rapport **S**_{**1**} **/ S**_{**2**} = 1,2 ou **S**_{**2**} **/ S**_{**1**} = 0,83 est bien compris dans l'intervalle donné ci-dessus.

Dans la mesure où toutes les sections des canaux **C**_{**1**} et **C**_{**2**} de l'élément présentent des valeurs **S**_{**1**}, **S**_{**2**} sensiblement identiques, la vitesse de circulation du fluide à l'intérieur de ces canaux est la même, de sorte qu'il peut être obtenu une homogénéité du décolmatage tangentiel quel que soit le canal pris dans l'élément de filtration.

Conformément à l'invention, la valeur du diamètre hydraulique **Φh**_{**1**} des canaux **C**_{**1**} de la première catégorie **I**_{**1**} est sensiblement identique à la valeur du diamètre hydraulique Φ**h**_{**2**} des canaux **C**_{**2**} de la seconde catégorie **I**_{**2**}. Les valeurs Φ**h**_{**1**} et Φ**h**_{**2**} sont considérées comme sensiblement identiques si le rapport Φ**h**_{**1**} **/ Φh**_{**2**} (ou Φ**h**_{**2**} / Φ**h**_{**1**}) est compris dans l'intervalle 0,75-1,3 et, de préférence, dans l'intervalle 0,95-1,05. Dans l'exemple illustré à la **fig. 1,** le diamètre hydraulique Φ**h**_{**1**} = 3,5 mm, tandis que le diamètre hydraulique Φ**h**_{**2**} = 3,5 mm.

Dans la mesure où tous les canaux **C**_{**1**}**, C**_{**2**} présentent un diamètre hydraulique sensiblement identique, il peut être prévu de réaliser des canaux adaptés avec un diamètre hydraulique donné pour permettre la filtration d'un fluide hétérogène, même visqueux et contenant des particules en suspension, sans toutefois boucher les canaux.

Conformément à une autre caractéristique de l'invention, les canaux **C**_{**1**}**, C**_{**2**} présentent une caractéristique supplémentaire pour éviter un bouchage des canaux lors de la filtration d'un fluide présentant un caractère hétérogène, c'est-à-dire contenant des particules en suspension. En effet, il peut être imaginé un élément de filtration possédant, par exemple, une première série de canaux de section droite transversale circulaire et une deuxième série de canaux de section rectangulaire dont une dimension est beaucoup plus petite que l'autre dimension. Si ces deux séries de hydrauliques et de sections sensiblement identiques, comme définies précédemment, il apparaît que les canaux de la deuxième série, qui définissent une circulation du fluide sous la forme d'une lame liquide, sont susceptibles d'être bouchés plus facilement que les canaux de l'autre série.

Aussi, pour éviter une obturation des canaux, le diamètre équivalent des canaux est tel que le rapport entre le diamètre équivalent et le diamètre hydraulique pour chaque canal, soit inférieur ou égal à 2. Ainsi, les rapports **Φe**_{**1**}**/ Φh**_{**1**} pour les canaux **C**_{**1**} de la première catégorie et **Φe**_{**2**} / **Φh**_{**2**} pour les canaux **C**_{**2**} de la deuxième catégorie, doivent être inférieurs ou égaux à 2. En effet, le rapport entre le diamètre équivalent et le diamètre hydraulique définit l'écart par rapport à la circularité des canaux. Si ce rapport est de 1, le canal est circulaire. Plus ce rapport s'écarte de la valeur 1, plus la forme du canal s'éloigne d'un cercle. Ainsi, lorsque ce rapport est élevé, soit la forme du canal possède une dimension très grande devant l'autre dimension (cas d'une lame liquide), soit la forme du canal possède n côtés (avec n > 4 ou 5, cas du canal en étoile). Quelle que soit la forme des canaux, l'évacuation du filtrat à travers la porosité du support **2** est freinée par l'existence d'un rapport élevé du diamètre équivalent sur le diamètre hydraulique, car le trajet du filtrat vers la surface extérieure **2**_{**1**} de l'élément est nécessairement allongé. Il a été constaté que si le rapport du diamètre équivalent sur le diamètre hydraulique est supérieur à 2, l'écoulement du filtrat est réduit, ce qui provoque une baisse de perméabilité.

Aussi, le respect de cette caractéristique dite de circularité, permet d'éviter le bouchage des canaux quelle que soit leur forme, tout en ne réduisant pas le débit du filtrat. Dans l'exemple illustré, les rapports dits de circularité pour les première et deuxième catégories de canaux **C**_{**1**}, **C**_{**2**} sont respectivement égaux à 1,11 (Φ**e**_{**1**} / Φ**h**_{**1**}) et à 1,02 (Φ**e**_{**2**} / Φ**h**_{**2**}), avec Φ**e**_{**1**} = 3,9 mm et Φ**e**_{**2**} = 3,56 mm.

Dans l'exemple illustré à la **fig. 1,** l'élément de filtration **1** selon l'invention comporte une troisième catégorie **I**_{**3**} de canaux **C**_{**3**} présentant chacun une surface recouverte par au moins une couche séparatrice. Les canaux **C**_{**3**} de cette troisième catégorie présentent une section droite transversale **S**_{**3**} de valeur identique. Les canaux **C**_{**3**} possèdent une même valeur pour le diamètre équivalent Φ**e**_{**3**}. Tous les canaux **C**_{**3**} possèdent un diamètre hydraulique Φ**h**_{**3**} identique. Tous les canaux **C**_{**3**} possèdent un profil ou une forme identique. Toutefois, la forme de la section des canaux **C**_{**3**} est différente de la forme de la section droite transversale des canaux des première et deuxième catégories. Comme pour les canaux **C**_{**1**}**, C**_{**2**}, les canaux **C**_{**3**} de la troisième catégorie présentent conformément à l'invention :
- une valeur, pour sa section droite transversale **S**_{**3**}, sensiblement identique aux valeurs des sections droites transversales des canaux **C**_{**1**} et **C**_{**2**},
- un diamètre hydraulique Φ**h**_{**3**} dont la valeur est sensiblement identique aux diamètres hydrauliques des canaux **C**_{**1**} et **C**_{**2**},
- et un diamètre équivalent Φ**e**_{**3**}, tel que le rapport entre le diamètre équivalent Φ**e**_{**3**} et le diamètre hydraulique Φ**h**_{**3**} soit inférieur ou égal à 2.

Comme expliqué précédemment, la section droite transversale **S**_{**1**} des canaux **C**_{**3**} est considérée comme sensiblement identique aux sections des canaux **C**_{**1**}, **C**_{**2**}, si les rapports des sections prises deux à deux, à savoir **S**_{**3**} / **S**_{**1**} (ou **S**_{**1**} **/ S**_{**3**}) et **S**_{**3**} **/ S**_{**2**} (ou **S**_{**2**} **/ S**_{**3**}) sont compris dans l'intervalle 0,75-1,3 et, de préférence, 0,95-1,05. De même, le diamètre hydraulique Φ**h**_{**3**} des canaux **C**_{**3**} de la troisième catégorie est considéré comme sensiblement identique aux diamètres hydrauliques des canaux **C**_{**1**}, **C**_{**2**}, si les rapports des diamètres hydrauliques pris deux à deux, à savoir Φ**h**_{**3**} / Φ**h**_{**1**} (ou Φ**h**_{**1**} / Φ**h**_{**3**}) et Φ**h**_{**3**} / Φ**h**_{**2**} (ou Φ**h**_{**2**} / Φ**h**_{**3**}) sont compris dans l'intervalle 0,75-1,3 et, de préférence, 0,95-1,05.

Dans l'exemple illustré, la troisième catégorie **I**_{**3**} comporte un seul canal **C**_{**3**} dont la section droite transversale passe par l'axe central **A** de l'élément. De préférence mais non exclusivement, le canal central **C**_{**3**} présente une section droite transversale circulaire centrée sur l'axe central **A**. Par exemple, le canal **C**_{**3**} présente une section droite transversale de valeur **S**_{**3**} = 10,17 mm², un diamètre hydraulique Φ**h**_{**3**} = 3,6 mm et un diamètre équivalent Φ**e**_{**3**} = 3,6 mm. Il s'ensuit que les rapports des valeurs des sections droites transversales **S**_{**1**} / **S**_{**3**} = 1,17 ou **S**_{**3**} / **S**_{**1**} = 0,84 et **S**_{**2**} / **S**_{**3**} = 0,98 ou **S**_{**3**} / **S**_{**2**} = 1,02 sont bien compris dans l'intervalle 0,75-1,3. De même, les rapports entre les diamètres hydrauliques du canal **C**_{**3**} et des canaux **C**_{**1**}**, C**_{**2**} sont tels que Φ**h**_{**1**} / **Φh**_{**3**} = 0,97 (ou Φ**h**_{**3**} / Φ**h**_{**1**} = 1,02) et Φ**h**_{**2**} **/ Φh**_{**3**} = 0,97 (ou Φ**h**_{**3**} / **Φh**_{**2**} = 1,02). Ces rapports sont bien compris dans l'intervalle 0,75-1,3. Enfin, le rapport Φ**e**_{**3**} / Φ**h**_{**3**} = 1 est bien inférieur à 2.

Tel que cela ressort de la description qui précède, l'invention s'applique pour un élément de filtration dont les canaux **C**_{**n**} peuvent être classés en n catégories **I**_{**1**}, **I**_{**2**}, **I**_{**3**}, ..., **I**_{**n**}, avec n ≥ 2, dans chacune desquelles tous les canaux présentent une section droite transversale **S**_{**n**} identique et un diamètre hydraulique Φ**h**_{**n**} identique, la forme des sections droites transversales des canaux étant différente entre les catégories de canaux.

Dans le cas général d'un élément de filtration comportant n catégories de canaux, les canaux des différentes catégories présentent une valeur sensiblement identique, pour les sections droites transversales et pour les diamètres hydrauliques, dans la mesure où, d'une part, les rapports entre deux quelconques des sections et, d'autre part, les rapports entre deux quelconques des diamètres hydrauliques sont compris dans les intervalles susdéfinis, à savoir 0,75-1,3 et, de préférence, 0,95-1,05. De plus, le rapport entre le diamètre équivalent et le diamètre hydraulique de chaque canal doit être inférieur ou égal à 2. Le respect de ces trois conditions permet d'optimiser le rapport de la surface filtrante sur le volume de support poreux utilisé, tout en permettant d'obtenir un décolmatage homogène dans tous les canaux et une absence de bouchage des canaux par le fluide à traiter.

Dans l'exemple illustré, il est à noter que les canaux sont réalisés de manière que les catégories auxquelles ils appartiennent se répartissent concentriquement. Il doit, bien entendu, être considéré que les canaux peuvent être aménagés de façon à occuper une position quelconque ne correspondant pas à une répartition déterminée des catégories de canaux.

Dans l'exemple illustré à la **fig. 1,** les première **I**_{**1**}, deuxième **I**_{**2**} et troisième **I**_{**3**} catégories comportent respectivement 16, 6 et 1 canaux **C**_{**1**}**, C**_{**2**}**, C**_{**3**}. Bien entendu, chacune de ces catégories peut comporter un nombre différent de canaux. Dans le même sens, les canaux **C**_{**1**}**, C**_{**2**} et **C**_{**3**} peuvent présenter des profils différents en respectant les caractéristiques énoncées ci-dessus. Dans l'exemple illustré à la **fig. 1**, l'élément de filtration est pourvu d'un canal central **C**_{**3**} permettant d'éviter les problèmes d'accumulation de matières dans un volume qui n'est jamais balayé par les liquides et principalement les liquides de nettoyage. Un tel canal permet d'éviter les problèmes de prolifération bactérienne en permettant le nettoyage du volume central par l'intermédiaire de liquides de nettoyage. Par exemple, cet élément **1** est plus particulièrement adapté pour la filtration de fluides visqueux. Dans l'exemple illustré à la **fig. 1**, l'élément de filtration présente un diamètre extérieur de 25 mm. Il est clair que l'invention peut également s'appliquer pour des éléments de filtration présentant un diamètre extérieur différent, par exemple, égal à 10 mm et comportant un nombre différent de catégories de canaux.

La **fig. 2** illustre un autre exemple de réalisation de l'invention selon lequel la première catégorie **I**_{**1**} de canaux comporte sept canaux **C**_{**1**}, tandis que la deuxième catégorie **I**_{**2**} comporte un unique canal **C**_{**2**}. La surface **S**_{**1**} de tous les canaux **C**_{**1**} de la première catégorie **I**_{**1**} possède une valeur sensiblement identique à la valeur **S**_{**2**} de la surface du canal **C**_{**2**}. Par exemple, les surfaces **S**_{**1**} et **S**_{**2**} possèdent une valeur égale à respectivement 34 et 33 mm². Le rapport **S**_{**1**} **/ S**_{**2**} = 1,03 (ou **S**_{**2**} / **S**_{**1**} = 0,97) est compris dans l'intervalle défini précédemment.

Selon cet exemple, le diamètre hydraulique Φ**h**_{**1**} des canaux de la première catégorie **I**_{**1**} est sensiblement égal à la valeur du diamètre hydraulique Φ**h**_{**2**} du canal **C**_{**2**} de la deuxième catégorie **I**_{**2**}. Par exemple, le diamètre hydraulique **Φh**_{**1**} est égal à 6 mm, tandis que le diamètre hydraulique Φ**h**_{**2**} est égal à 6,5 mm. Le rapport Φ**h**_{**1**} / Φ**h**_{**2**} = 0,92 (ou Φ**h**_{**2**} / Φ**h**_{**1**} = 1,08) est compris dans l'intervalle défini précédemment. De plus, le rapport entre le diamètre équivalent et le diamètre hydraulique pour chaque canal **C**_{**1**}**, C**_{**2**} est égal respectivement à 1,09 et 1, c'est-à-dire ≤ 2, avec Φ**e**_{**1**} = 6,58 mm et Φ**e**_{**2**} = 6,5 mm.

L'invention n'est pas limitée aux exemples décrits et représentés, car diverses modifications peuvent y être apportées sans sortir de son cadre.

## Revendications

1. Elément inorganique de filtration d'un milieu fluide, en vue de récupérer un filtrat, l'élément comportant :
- un support poreux rigide inorganique (**2**) de forme cylindrique présentant un axe central longitudinal (**A**), et possédant une section droite transversale hexagonale ou circulaire,
- des canaux (**C**_{**1**}, **C**_{**2**}, **C**_{**3**}, ..., **C**_{**n**}) ménagés sur le support parallèlement à son axe central et présentant une surface (**4**) recouverte par au moins une couche séparatrice destinée à être en contact avec le milieu fluide, ces canaux pouvant être classés dans n catégories (**I**_{**1**}, **I**_{**2**}, **I**_{**3**}, ..., **I**_{**n**}), avec n ≥ 2, dans chacune desquelles tous les canaux présentent une section droite transversale (**S**_{**1**}, **S**_{**2**}, **S**_{**3**}, ..., **S**_{**n**}) identique, un diamètre hydraulique (Φ**h**_{**1**}, Φ**h**_{**2**}, Φ**h**_{**3**}, ..., Φ**h**_{**n**}) identique, et un diamètre équivalent (Φ**e**_{**1**}, Φ**e**_{**2**}, Φ**e**_{**3**}, ..., Φ**e**_{**n**}) identique, la forme des sections droites transversales des canaux étant différente entre les catégories,
**caractérisé en ce que** les canaux (**C**_{**1**}, **C**_{**2**}, **C**_{**3**}, ..., **C**_{**n**}) des différentes catégories présentent :
- des diamètres hydrauliques (Φ**h**_{**1**}, Φ**h**_{**2**}, Φ**h**_{**3**}, ..., Φ**h**_{**n**}), tels que les rapports entre deux quelconques diamètres hydrauliques soient compris dans l'intervalle 0,75 - 1,3,
- des sections droites transversales **(S**_{**1**}**, S**_{**2**}**, S**_{**3**}**,** ..., **S**_{**n**}**),** telles que les rapports entre deux quelconques sections droites transversales soient compris dans l'intervalle 0,75 - 1,3,
- et des diamètres équivalents **(Φe**_{**1**}**, Φe**_{**2**}**, Φe**_{**3**}**,** ..., **Φe**_{**n**}**),** tels que le rapport entre le diamètre équivalent et le diamètre hydraulique pour chaque canal soit inférieur ou égal à 2.

2. Elément selon la revendication 1, **caractérisé en ce que** les canaux (**C**_{**1**}, **C**_{**2**}, **C**_{**3**}, ..., **C**_{**n**}) des différentes catégories présentent des sections droites transversales, telles que les rapports des sections droites transversales prises deux à deux sont compris dans l'intervalle 0,95-1,05.

3. Elément selon la revendication 1, **caractérisé en ce que** les canaux (**C**_{**1**}**, C**_{**2**}, **C**_{**3**}, ..., **C**_{**n**}) des différentes catégories présentent des diamètres hydrauliques, tels que les rapports des diamètres hydrauliques pris deux à deux sont compris dans l'intervalle 0,95-1,05.

4. Elément selon la revendication 1, **caractérisé en ce que** l'une des catégories de canaux comporte un canal (**C**_{**3**}) dont la section droite transversale passe par l'axe central (A) du support poreux.

5. Elément selon la revendication 4, **caractérisé en ce que** le canal (**C**_{**3**}), dont la section droite transversale passe par l'axe central du support, est centré sur ledit axe.

6. Elément selon la revendication 5, **caractérisé en ce que** le canal centré (**C**_{**3**}) est de section droite transversale circulaire.

## Patentansprüche

1. Anorganisches Filterelement eines flüssigen Mediums zur Gewinnung eines Filtrats, wobei das Element folgendes enthält:
- einen porösen, starren anorganischen Träger (2) von zylindrischer Form, der eine Mittenlängsachse (A) hat und einen geraden hexagonalen oder kreisförmigen Querschnitt besitzt;
- Kanäle (C₁, C₂, C₃, ..., Cₙ), die auf dem Träger parallel zu dessen Achse angeordnet sind und die eine Fläche (4) haben, die von mindestens einer Trennschicht überzogen ist, die dafür bestimmt ist, in Kontakt mit dem flüssigen Medium zu sein, wobei diese Kanäle in n Kategorien (I₁, I₂, I₃, ..., Iₙ) eingestuft werden können, wobei n > 2, in jeder von welchen alle Kanäle einen identischen geraden Querschnitt (S₁, S₂, S₃, ..., Sₙ), einen Hydraulikdurchmesser (Φh₁, Φh₂, Φh₃,..., Φhₙ) und einen entsprechenden Durchmesser (Φe₁, Φe₂, Φe₃, ..., Φeₙ) haben, wobei die Form der geraden Querschnitte der Kanäle zwischen den Kategorien verschieden ist, **dadurch gekennzeichnet, dass** die Kanäle (C₁, C₂, C₃, ..., Cₙ) der einzelnen Kategorien folgendes aufweisen:
- solche Hydraulikdurchmesser (Φh₁, Φh₂, Φh₃,..., Φhₙ), dass die Verhältnisse zwischen zwei beliebigen Hydraulikdurchmessern zwischen 0,75 und 1,3 betragen,
- solche geraden Querschnitte (S₁, S₂, S₃, ..., Sₙ), dass die Verhältnisse zwischen zwei beliebigen geraden Querschnitten zwischen 0,75 und 1,3 betragen,
- und solche entsprechenden Durchmesser (Φe₁, Φe₂, Φe₃,..., Φeₙ), dass das Verhältnis zwischen dem entsprechenden Durchmesser und dem Hydraulikdurchmesser für jeden Kanal kleiner als oder gleich 2 ist.

2. Element nach Anspruch 1, **dadurch gekennzeichnet, dass** die Kanäle (C₁, C₂, C₃, ..., Cₙ) der verschiedenen Kategorien solche geraden Querschnitte haben, dass die Verhältnisse der paarweisen geraden Querschnitte zwischen 0,95 und 1,05 betragen.

3. Element nach Anspruch 1, **dadurch gekennzeichnet, dass** die Kanäle (C₁, C₂, C₃, ..., Cₙ) der verschiedenen Kategorien solche Hydraulikdurchmesser haben, dass die Verhältnisse der paarweisen Hydraulikdurchmesser zwischen 0,95 und 1,05 betragen.

4. Element nach Anspruch 1, **dadurch gekennzeichnet, dass** eine der Kanalkategorien einen Kanal (C₃) enthält, dessen gerader Querschnitt durch die Mittenachse (A) des porösen Trägers geht.

5. Element nach Anspruch 4, **dadurch gekennzeichnet, dass** der Kanal (C₃), dessen gerader Querschnitt durch die Mittenachse des Trägers geht, auf dieser Achse zentriert ist.

6. Element nach Anspruch 5, **dadurch gekennzeichnet, dass** der zentrierte Kanal (C₃) von einem kreisförmigen geraden Querschnitt ist.

## Claims

1. An inorganic element for filtration of a fluid medium in order to recover a filtrate, where the element includes:
- an inorganic rigid porous support (2) of cylindrical shape, with a longitudinal central axis (A), and having a transverse hexagonal or circular straight section,
- channels (C₁, C₂, C₃, ..., Cₙ) created on the support in parallel with its central axis, and having a surface (4) covered by at least one separating layer intended to be in contact with the fluid medium, where these channels can be classified into n categories **(I**_{**1**}**, I**_{**2**}**, I**_{**3**}**,** ..., **I**_{**n**}**),** where n ≥ 2, in each of which all of the channels have an identical transverse straight section **(S**_{**1**}**, S**_{**2**}**, S**_{**3**}**,** ..., **S**_{**n**}**),** an identical hydraulic diameter **(Φh**_{**1**}**, Φh**_{**2**}**, Φh**_{**3**}**,** ..., **Φh**_{**n**}**)** and an identical equivalent diameter **(Φe**_{**1**}**, Φe**_{**2**}**, Φe**_{**3**}**,** ..., **Φ**_{**n**}**),** with the shape of the transverse straight sections of the channels being different between the categories, **characterised in that** the channels **(C**_{**1**}**, C**_{**2**}**, C**_{**3**}**,** ..., **C**_{**n**}**)** of the different categories comprise:
- hydraulic diameters **(Φh**_{**1**}**, Φh**_{**2**}**, Φh**_{**3**}**,** ..., **Φh**_{**n**}**)** such that the ratios between any two hydraulic diameters fall within the interval 0.75-1.3,
- transverse straight sections (**S**_{**1**}, **S**_{**2**}, **S**_{**3**}, ..., **S**_{**n**}) such that the ratios between any two hydraulic diameters fall within the interval 0.75 to 1.3,
- and equivalent diameters **(Φe**_{**1**}**, Φe**_{**2**}**, Φe**_{**3**}**, ..., Φ**_{**n**}**)** such that the ratio between the equivalent diameter and the hydraulic diameter for each channel should be less than or equal to 2.

2. An element according to claim 1, **characterised in that** the channels (C₁, C₂, C₃, ..., Cₙ) of the different categories have transverse straight sections, such that the ratios of the transverse straight sections, taken in pairs, fall within the interval 0.95-1.05.

3. An element according to claim 1, **characterised in that** the channels **(C**_{**1**}**, C**_{**2**}**, C**_{**3**}**, ..., C**_{**n**}**)** of the different categories have hydraulic diameters, such that the ratios of the hydraulic diameters, taken in pairs, fall within the interval 0.95-1.05.

4. An element according to claim 1, **characterised in that** the channels include one channel (C3) whose transverse straight section passes through the central axis (A) of the porous support.

5. An element according to claim 4, **characterised in that** channel (C3) whose transverse straight section passes through the central axis of the porous support, is centred on the said axis.

6. An element according to claim 5, **characterised in that** the centred channel (C3) is of circular transverse section.
